Europäisches Patentamt

(19) European Patent Office

Office européen des brevets

(11) Publication number: 0 087 612
A2

## (12) EUROPEAN PATENT APPLICATION

(21) Application number: 83101080.6

(22) Date of filing: 04.02.83

(51) Int. Cl.³: G 01 L 7/00
G 01 L 11/00

(30) Priority: 26.02.82 US 352977

(43) Date of publication of application:
07.09.83 Bulletin 83/36

(84) Designated Contracting States:
DE FR GB IT NL

(71) Applicant: The Foxboro Company
38 Neponset Avenue
Foxboro Massachusetts 02035(US)

(72) Inventor: Petros, Kenneth W.
19 Tamarack Road
Norton Massachusetts 02766(US)

(74) Representative: Patentanwälte Henkel, Pfenning,
Feiler, Hänzel & Meinig
Möhlstrasse 37
D-8000 München 80(DE)

(54) Pressure-to-frequency transducer.

(57) A vibratable element whose resonant frequency changes in accordance with an external source of variable applied pressure, has an inner cavity in fluid communication with the source of applied pressure, so that variations therein produce corresponding changes in the internal pressure of the cavity. Increases in this internal pressure cause the flexible walls surrounding the cavity to expand outwardly, thereby increasing the mechanical stiffness of the element. The increased stiffness produces a corresponding increase in the resonant frequency. Conversely, a decrease in pressure allows the walls to slacken and reduce the overall stiffness of the element. A linear relationship exists between changes in applied pressure and changes in the resonant frequency, over an appreciable range of pressures. An optical scheme detects the frequency, and conventional electronics correlate the frequency to the corresponding pressure, or to another physical variable represented by the applied pressure.

-1-

## Pressure-to-frequency transducer

The present invention relates generally to the field of control instruments which employ vibratable elements with resonant frequencies that change in accordance with externally imposed influences, and more particularly to those in which there is a pressure-to-frequency conversion.

It is well known in the process control industry that accurate and effective sensors can be made for detecting changes in process variables such as rate of fluid flow, pressure, temperature, etc., by making use of the oscillatory characteristics of a vibrating element such as a quartz crystal, a reed, a wire or a flat ribbon. Generally, an intermediate mechanism couples the effects of the process being monitored to the vibrating element so as to effect changes in its dynamic characteristics and thereby its resonant frequency. Quite commonly, these sensors perform a pressure to frequency conversion, with the pressure being either the ultimate process variable being sensed, or an intermediate variable which is somehow related to the ultimate process variable. Typically, in the case of a vibrating wire or ribbon, the variable pressure is applied to an expansible bellows which in turn is mechanically linked to the wire. As the bellows expands or contracts with the influences of the applied pressure, the tension on the wire changes accordingly. The greater the tension on the wire or ribbon, the higher its resonant frequency. Any of several conventional schemes is employed for inducing the oscillation of the wire, and conventional electronic circuitry is used to detect the frequency of vibration and to correlate it to the process parameter being monitored. Typical of such vibrating wire systems are those shown in U.S. Patent Nos. 4,165,651 and 4,149,422 and copending applications Serial Nos. 161,123 and 155,325, all of which have the same assignee as the present application.

-2-

Although many of these earlier devices have found broad application in the process control field, nevertheless they still suffer from some drawbacks. For example the resonant frequency of the vibrating wire-type devices is not linearly related to the change in applied pressure, and so linearizing schemes must be used. The complexity of the vibrating wire support structure and the tension adjusting mechanism offer multiple sources of innaccuracy due to temperature effects for which there must be compensation. Also the presence of an intermediate structure between the variable pressure and the vibrating element adds to overall complexity and cost of the sensor.

In light of the above considerations, it is an object of the present invention to provide a simplified structure for linearly converting a pressure signal to a frequency signal, and in which a vibrating element interacts directly with the source of pressure.

It is a further object of the present invention to accomplish the above using a mechanism that is readily adaptable to existing pneumatic control systems.

It is a further object of the present invention to achieve the foregoing results using an apparatus which is readily adaptable for use with an optical detection scheme.

An embodiment of a pressure-to-frequency transducer in accordance with the present invention comprises a vibratable element having an internal cavity, the resonant frequency of the element being variable in accordance with the magnitude of the internal pressure of the cavity. The transducer further includes a means for varying the internal pressure of the cavity in accordance with the changes in an external source of variable pressure, and a means for driving the vibratable element to oscillate at its resonant frequency. A scheme also is provided for detecting the resonant frequency of the element and for correlating the resonant frequency to the magnitude of the external variable pressure.

In a particular embodiment of the invention, the internal cavity is filled with an incompressible fluid, which is held within the cavity by a deformable diaphragm serving as a seal. The deformable diaphragm is subjected to changes in the external pressure and moves inwardly or outwardly with respect to the cavity depending upon the direction of the pressure differential. In the case of an increase in pressure the diaphragm moves further into the cavity to increase the pressure of the fluid, causing an outward deformation of the flexible structural walls of the element. This has the effect of increasing the mechanical stiffness of the vibratable element in the plane perpendicular to the deformation. The increased stiffness produces a corresponding increase in the resonant frequency of the element.

Optionally, the walls of the element can have a reflective outer surface so that an optical sensor can be used to detect the frequency of vibration. The intensity of the light reflected into the optical sensor from the reflective surface varies at the resonant frequency of the vibratable element.

The novel aspects and distinct advantages of the present invention will be made clear by the following detailed description, in conjunction with the accompanying drawings, in which:

FIG. 1 is an elevation view, partially in cutaway, of a pressure-to-frequency transducer in accordance with the present invention;

-4-

FIG. 2   is a detail view, partially in cutaway, of the vibratable element of the transducer of FIG. 1;

FIG. 3   is a detail view of an alternate configuration of the vibratable element;

FIG. 4   is an exploded view of a third configuration of the vibratable element;

FIG. 5   is a detail view of a fourth configuration of the vibratable element;

FIGS 6A and 6B are cross-sectional views of the vibratable element of FIG. 2 taken along the line 6-6 showing the element in its relaxed and expanded conditions respectively; and

FIG. 7   is a block diagram of an optical detection system usable with the pressure-to-frequency transducer.

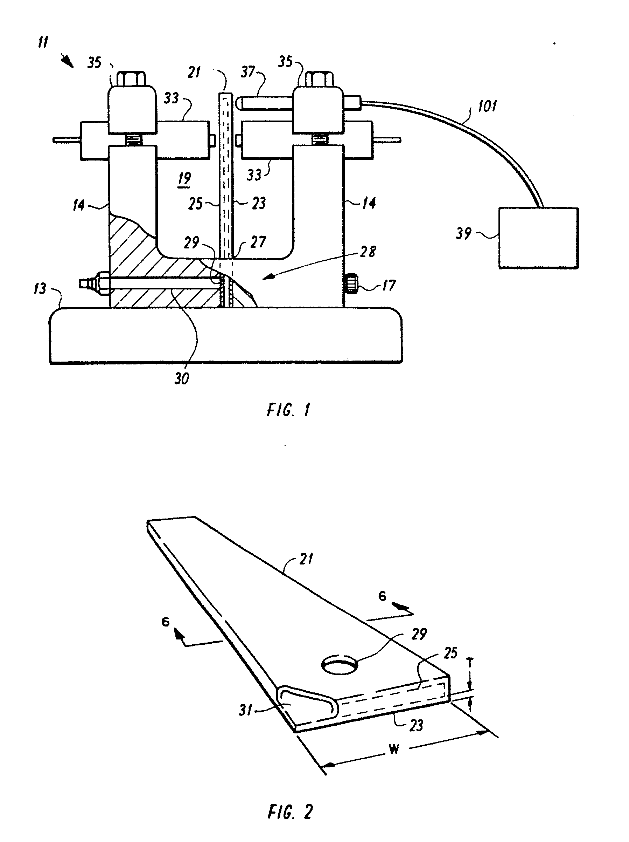

In FIG. 1 a pressure-to-frequency transducer 11 has a mounting base 13 having two separable L-shaped sections 14 joined together by screws 17.   The L-shaped sections are arranged so as to provide a central recess 19.   Extending upwardly within this recess is a thin vibratable element 21 which is firmly clamped at its bottom end between the two L-shaped sections and is allowed to bend laterally in the recess in the manner of a cantilevered beam.   The element is shown as being cylindrical with a generally rectangular cross-section, and having outer walls 23, 25, which are joined along their common edges by any suitable bonding means.   It should be noted that cylinders of different cross-sections also can be used in the present invention, provided that the overall width of the cylinder is significantly greater than its overall thickness.

-5-

In the rectangular cross-sectional element 21 (see also FIG. 2), the outer walls 23, 25 are made of a spring-like material, i.e., one having the property of being elastically deformable, and capable of regaining its normal shape when the deforming forces are removed. Such materials include stainless steel, and even some forms of plastic or rubber. Particularly suitable materials, because of favorable thermal characteristics, are quartz and an alloy of nickel, iron and chromium known as Ni-Span-C (a trademark of the Huntington Alloy Products Division of The International Nickel Co., Inc.). For the sake of discussion, the vibratable element of FIG. 1 will be considered to be Ni-Span-C. The vibratable element is able to oscillate laterally about a pivot at its interface 27 with the L-shaped sections 14. The element also extends downwardly into the base as shown at reference numeral 28. An air-inlet orifice 29 (see also FIG. 2) in the outer wall 25 connects with one end of an air-inlet conduit 30 which passes through the mounting base. The opposite end of the conduit connects to a source of variable pneumatic pressure (not shown). This pressure either can be the physical variable being measured or can be related to another physical variable (e.g., temperature, displacement, etc.) being measured. As shown in FIG. 2, this inlet orifice communicates with an internal cavity 31 within the element.

A pair of electromagnetic coils 33 are rigidly secured to the L-shaped sections 14 of the mounting base 13 by means of clamps 35. The coils are directed generally toward one another, but are positioned on opposite sides of the vibratable element 21. The coils are connected to a suitable source of a-c excitation current (not shown) which, in a conventional manner, energizes the coils so as to produce a magnetic field which interacts with the magnetic (Ni-Span-C) outer walls 23, 25 of the element to drive the element into

-6-

vibration at its natural resonant frequency. Although the illustrated embodiment is described in terms of an electromagnetic drive system, other equally feasible drive systems are possible, and may in fact be necessary if the walls of the vibratable element are made from a non-magnetic material.

For example, an alternate scheme could include a suitably configured jet nozzle, disposed to supply a stream of air either continuously or in a pulsed fashion on the outer walls of the vibratable element, so as to induce oscillation. Alternatively, other conventional mechanical drive systems are feasible, and can be used effectively in the context of the present invention. For a typical vibratable element having wall thicknesses on the order of thousandths of an inch and a length of approximately one to two inches, only a few microwatts of energy are required to produce oscillation.

An optical fiber 37 extends through one of the clamps 35 and is disposed adjacent the vibrating element 21. The function of this fiber, in conjunction with a remote sensing system 39, is to detect the frequency at which the element is vibrating and to produce a corresponding time-varying output signal which can be processed to provide an indication of the change in pressure, in a way to be described in more detail hereinafter.

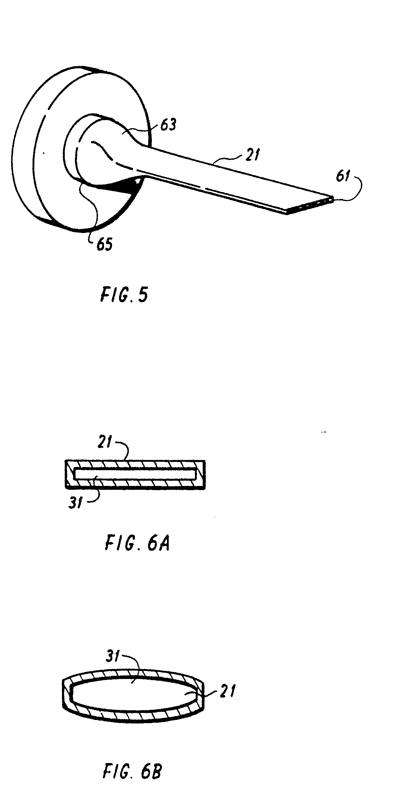

The nominal resonant frequency of the element 21 is determined by its physical characteristics, including its dimensions and constituent material. However, changes in the resonant frequency from its nominal value can be effected by introduction of a pressurized fluid, most commonly air, into the internal cavity 31. As shown in FIG. 2 and more clearly in FIGS. 6A and 6B, an appreciable portion of the interior of the vibratable element 21 is occupied by the cavity 31, shown as having a shape essentially the same as that of the

-7-

outer contours of the resonant element. This cavity communicates with the inlet orifice 29 to allow air supplied by the external source (not shown) to vary the pressure within the cavity. As more and more air is pumped into the cavity, thereby increasing the internal pressure beyond the atmospheric pressure in the region surrounding the element, the walls 23, 25 expand outwardly. Clearly the construction and the materials of the element must be such that it be able to withstand the normal operating pressures to which the element would be exposed in use, with some margin of safety in case of accidental overload. In the process control industry, the commonly used range of operating pressures is from 3-15 psig. The maximum pressure that can be withstood by the element is dependent, among other things, on the width W of the element and the thickness T of the outer walls, according to the formula:

$$P_{max} = 2 \times (\text{yield stress}) \times \frac{T^2}{W^2}$$

The nominal resonant frequency of the element is that frequency which occurs when the pressure within the cavity is equal to the ambient atmospheric pressure, and the element is in a relaxed, non-expanded state (see FIG. 6A).

However, in FIG. 6B the pressure has been increased to a level above that of the ambient atmosphere and the walls 23, 25 have bowed outwardly to new positions. The bowing of each wall increases its stiffness, and so increases the overall stiffness of the element itself. This increased stiffness in turn means a higher resonant frequency, similar to the way in which added tension increases the resonant frequency of a vibrating string. Experimentation has shown that the resonant frequency of the element 21 varies linearly with the change in internal pressure, particularly over the com-

-8-

mercially useful pressure range from about 3 to 15 psig. Naturally, elements whose frequency changes linearly over a particular pressure range can be developed by appropriate selection of materials and dimensions. The existence of this linear relationship obviates the need for linearizing schemes or circuitry in the later processing of the frequency signal, and enhances the accuracy of the pressure measurement.

Also it should be mentioned that the degree of linearity can be effected, to some extent, by the manner in which the vibratable element is fastened to the base. In FIG. 1, the interface 27 between the element 21 and the sections 14, about which the pivoting of the element occurs, is essentially a straight line. However, to insure linearity at the lower pressures a contour other than a straight line may be required at this interface. Such modifications would be apparent to one skilled in the art of stress analysis, and so will not be discussed further here.

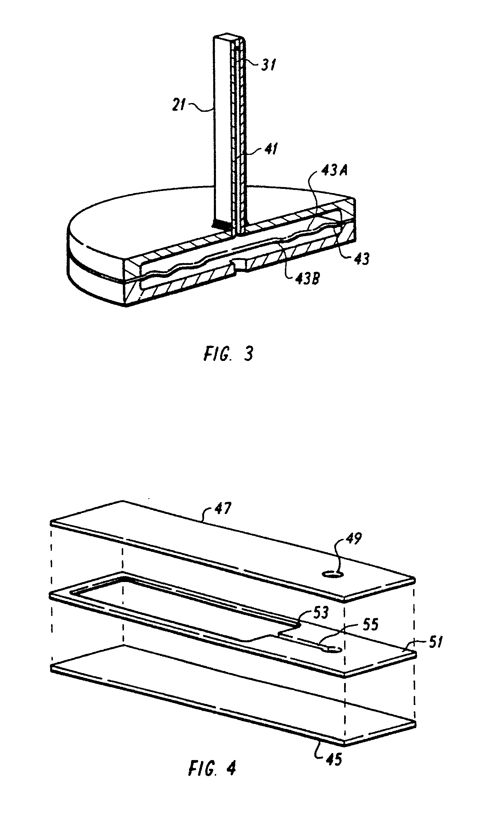

Although in the embodiment of FIGS. 1 and 2, the increases in pressure are communicated directly into the internal cavity 31, in some situations this may be impractical, perhaps due to air-borne contaminants which may build up within the cavity and adversely affect the dynamic response of the element 21. For these cases, the alternate construction of FIG. 3 can be used. In this embodiment, the internal cavity 31 is filled with an incompressible fluid 41, such as a silicone oil. The fluid is sealed within the cavity by a resilient deformable diaphragm 43, the inner surface 43a of which is fully in contact with the fluid. The variable external pressure now operates on an opposite outer surface 43b of the diaphragm, rather than directly on the outer walls 23, 25. As the diaphragm deforms inwardly in response to changes in pressure, the pressure increases are transmitted directly to the fill fluid 41, which in turn acts on the walls, and expands them outwardly as before.

Yet another construction of the resonant element 21, suitable for simplified manufacturing is shown in FIG. 4. A three-part sandwich-type construction is used, wherein a bottom section 45 is a flat plate made of the appropriate elastic material, essentially the same as the outer walls 23, 25 of the element shown in FIGS. 1 and 2. A top section 47 is almost identical to the bottom section but has an inlet orifice 49 for communicating with the supply air line (not shown). A center section 51, shown in more detail in FIG. 5, has an aperture 53 cut or stamped through it. A channel 55 interconnects with the aperture 53. When the three sections are stacked together, and joined along their outer periphery by an appropriate welding process to form an integrated unit, the aperture defines an internal cavity. The channel 55 intersects the orifice 49 to allow introduction of air to the cavity.

Referring now to FIG. 5, the vibratable element 21 is made from a single piece of thin-walled tubing which has been flattened along most of its length, and then crimped and welded at its outermost end 61 to form a fluid-tight seal. Its innermost end 63 has been left with its original circular cross-section, for ease of attachment to a transition piece 65 which communicates with the source of variable pressure (not shown).

What has been achieved by the present invention is a direct conversion of changes in pressure to a corresponding change in frequency. The pressure can be the ultimate parameter to be measured, or can be an intermediate parameter which in turn corresponds to another process parameter. For example,

-10-

if the ultimate process parameter is temperature, the temperature can be used to expand some thermally-responsive device to develop an increased pressure, with the increased pressure being fed into the vibratable element. Of course, in such a situation a factor correlating the temperature, the pressure, and the resultant frequency must enter into the signal processing to yield an accurate output indication. In a similar manner, a pressure signal representative of flow rate, liquid level, even mechanical displacement can be converted by the present invention into a direct frequency readout.

Although any one of a number of conventional detection schemes can be used to pick up the oscillation of the resonant element and determine its frequency, a particularly useful system is an optical sensing scheme similar to that disclosed in a copending patent application, Serial No. 350,687, having the same assignee as the present application.

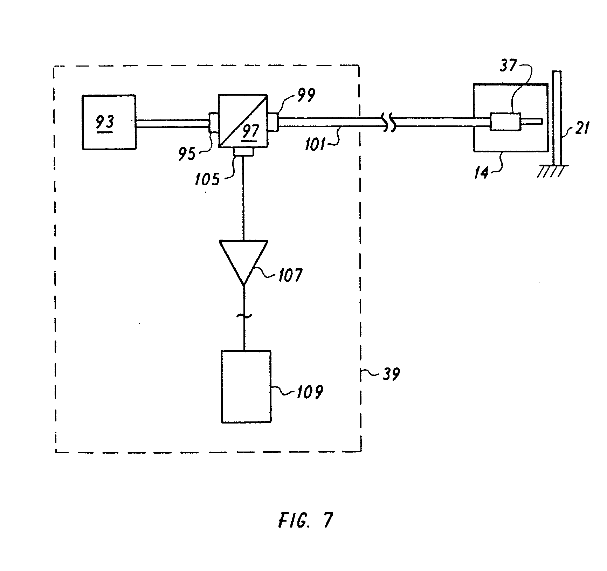

Referring to FIG. 7, the optical detection system 39 operates as follows. A power supply 93 provides voltage to a light-emitting diode (LED) 95, to generate a beam of light incident on a beamsplitter 97. The light emitted by the LED can be generated in either a continuous or a pulsed fashion, whichever is suitable to the application. The beamsplitter is designed so that for light incident from the left-hand direction, some of the light is transmitted straight through into a lens 99, and some is reflected upwardly. The lens concentrates the transmitted light into the attached optical fiber 37 the end of which is fixed within the clamp 35 (see also FIG. 1), adjacent the vibratable element 21. The light is thus directed by the fiber onto the rapidly vibrating element.

As the element 21 alternately moves toward, and then away from, the fiber 37, the intensity of the light reflected by the outer surface of the element back into the fiber varies periodically, at the same rate as the frequency of vibration. The outer surface of the element can have a reflective coating thereon to enhance its reflectivity. This intensity-modulated reflected light beam travels back along the fiber to the beamsplitter 97, where a portion of the light is directed into a photodetector 105. The photodetector converts the variable intensity light beam into an electrical signal whose magnitude varies at the same frequency. The electrical output from the photodetector is amplified by an amplifier 107 and is fed into a conventional electronic circuit 109, which correlates the frequency signal to the magnitude of the process parameter being measured. The output of this circuit can be used to operate a display or be further processed to serve other process control functions.

Although the present invention has been described in terms of the preferred embodiment shown in the accompanying figures, certain modifications and changes will become apparent to those skilled in the art. For example, modifications in the structure of the vibratable element may be envisioned, as well as alternate schemes for driving the element into vibration and for detecting the frequency of oscillation, whether by optical or non-optical means. Nevertheless it is intended that such modifications be encompassed within the scope of the following claims.

What is claimed is:

1. A measurement apparatus of the type in which the resonant frequency of a mechanically vibratable element varies in accordance with changes in a physical parameter being measured, and having means (33) for driving said vibratable element to oscillate at its resonant frequency and means (39) for detecting the resonant frequency of said vibratable element, characterized by

said vibratable element (21) having an internal cavity (31), the resonant frequency of said element being variable in accordance with the magnitude of the internal pressure within said cavity; and

means (29) for varying the internal pressure of said cavity in accordance with changes in an external source of variable pressure.

2. The measurement apparatus as set forth in claim 1 wherein the variation of internal pressure within said internal cavity effects variations in said resonant frequency by effecting changes in the mechanical stiffness of said vibratable element.

3. The measurement apparatus as set forth in claim 2 wherein said vibratable element is a thin elongate member fixed at one end and able to move about said fixed end in the manner of a cantilevered beam, and includes elastically deformable outer walls (23, 25) surrounding and defining said internal cavity, and wherein increases in said internal pressure causes said walls to bow outwardly, increasing the stiffness thereof.

4.  The measurement apparatus as set forth in claim 3 wherein said internal cavity is filled with air and wherein said means for varying the internal pressure of said cavity comprises an air inlet 29 in fluid communication with both said cavity and said external source of variable pressure.

5.  The measurement apparatus as set forth in claim 3 wherein said internal cavity is filled with an incompressible fluid (41).

6.  The measurement apparatus as set forth in claim 5 wherein said means for varying the internal pressure of said cavity is:

a flexible, deformable diaphragm (43) disposed so as to seal said fluid within said cavity and having a first surface in contact with said fluid and an oppositely directed second surface; and

an inlet for placing said external source of variable pressure in fluid communication with said second surface of said diaphragm, whereby deformations of said diaphragm in response to said variable pressure transmit the changes in pressure to said incompressible fluid.

7.  The measurement apparatus as set forth in claim 3, wherein said means for detecting (39) is:

a source of light (93, 95);

fiber optic means (37) disposed so as to accept light from said source, to direct said light onto said vibratable element, and to receive back light reflected from said vibratable element, the intensity of said reflected light varying at a rate equal to the resonant frequency of said vibratable element; and

means (105, 107, 109) for receiving the reflected light of variable intensity and producing an output signal indicative of the resonant frequency of said vibratable element.

FIG. 1

FIG. 2

**0087612**

RJP 008

2/4

FIG. 3

FIG. 4

FIG. 5

FIG. 6A

FIG. 6B

FIG. 7